# EUROPÄISCHE PATENTSCHRIFT

(11) **EP 4 215 050 B1**
(45) Veröffentlichungstag und Bekanntmachung des Hinweises auf die Patenterteilung: **23.04.2025**
(21) Anmeldenummer: 23152123.8
(22) Anmeldetag: 18.01.2023
(51) Int. Cl.: B30B 11/00, A22C 7/00, B29C 33/26, B30B 7/04

(54) **VERFAHREN ZUM UMFORMEN EINES PRODUKT-STÜCKES SOWIE FORMROHR-EINHEIT HIERFÜR**
METHOD FOR SHAPING A PRODUCT PIECE AND CORRESPONDING SHAPING TUBE UNIT
PROCÉDÉ DE FORMAGE D'UNE PIÈCE DE PRODUIT ET UNITÉ DE TUBE DE FORMAGE CORRESPONDANTE

(30) Priorität: 24.01.2022 DE 102022101565
(43) Veröffentlichungstag der Anmeldung: 26.07.2023
(73) Patentinhaber: TVI Entwicklung und Produktion GmbH, 83052 Bruckmühl (DE)
(72) Erfinder: GEBERT, Markus, 84549 Eiselfing (DE)
(74) Vertreter: Weickmann & Weickmann PartmbB

(56) Entgegenhaltungen:
- EP-A1- 0 521 179
- EP-A1- 3 542 979
- EP-B1- 0 929 383
- WO-A1-2020/127575
- DE-A1- 2 446 959

## Beschreibung

### I. Anwendungsgebiet

Die Erfindung betrifft das Umformen durch Verpressen eines wegen des hohen Flüssigkeitsanteils so gut wie nicht kompressiblen Produkt-Stückes, bestehend aus einem Material, welches sich je nach Randbedingungen mehr elastisch oder mehr plastisch verhält, wie etwa ein Stück aus gewachsenem Fleisch.

Ein solches Produkt-Stück, das im Ausgangszustand über seine Länge einen sich ändernden Querschnitt aufweist, wird zu einem über die gesamte Länge gleichen Querschnitt umgeformt, und meist anschließend aufgeschnitten in, insbesondere möglichst gewichtsgenaue, Scheiben.

### II. Technischer Hintergrund

Für die Zwecke der vorliegenden Erfindung wird im Folgenden häufig von Fleisch-Stücken gesprochen, ohne die Erfindung auf diese spezielle Art eines Produkt-Stückes zu beschränken.

Die Herstellung von gewichtsgenauen Scheiben oder Portionen aus einem Stück ist relativ einfach möglich, wenn das Stück über seine Länge überall den gleichen Querschnitt besitzt - dann Kaliber genannt - und aus einem homogenen, überall gleichen, begrenzt elastischen Material besteht, wie etwa Wurst oder Käse, welches darüber hinaus meist auch etwas komprimierbar ist, da es zu einem wesentlichen Teil aus koaguliertem Eiweiß besteht.

Hierfür sind so genannte Slicer bekannt, die meist mit einem rotierenden, runden oder spiralförmigen, Messer, welches z. B. quer zum Kaliber vor- und zurückgefahren werden kann, jeweils eine Scheibe abschneiden, während das dabei meist frei liegende Kaliber kontinuierlich vorwärtsgefahren wird.

Ein unregelmäßig geformtes Produkt-Stück aus gewachsenem Fleisch, z. B. eine Oberschale, hat diese Eigenschaften jedoch nicht, denn jedes Stück besitzt eine andere Größe und Gestaltung und darüber hinaus einen sich über die Länge ändernden Querschnitt und besteht aus Material-Anteilen unterschiedlicher Konsistenz, Elastizität und Komprimierbarkeit, beispielsweise aus Fett, Wasser, Muskelgewebe, der umgebenden Silberhaut und gegebenenfalls auch noch Knochen wie bei einem Kotelett-Strang, die sich mechanisch sehr unterschiedlich verhalten.

Darüber hinaus sollte klar sein, dass ein gewachsenes Fleisch-Stück in aller Regel ein länglicher Muskelstrang ist, der in seiner Längsrichtung, also der Verlaufsrichtung seiner Muskelfasern, eine sehr viel größere Verformbarkeit und Plastizität besitzt als quer hierzu, denn das Verlängern und Verkürzen des Muskels ist ja gerade dessen ursächliche Aufgabe.

In diesem Zusammenhang ist es bereits bekannt, ein solches unregelmäßig geformtes Produkt-Stück zunächst so umzuformen, dass es über die gesamte Länge einen definierten, bekannten Querschnitt besitzt.

Dann kann eine grobe Relation zwischen der einstellbaren Dicke der Scheibe und dem gewünschten Gewicht der Scheibe hergestellt werden, wenn auch nicht exakt, da sich von einer Scheibe zur nächsten die Zusammensetzung des Fleisches, dessen Komponenten unterschiedliche spezifische Gewichte aufweisen, bereits ändern kann.

Um diese Verformung zu erreichen, wird das - in der Regel leicht angefrorene - Produkt-Stück meist zunächst in ein umfänglich geschlossenes Formrohr mit einem hinsichtlich des Querschnittes über die Länge gleichbleibenden inneren Formhohlraum eingebracht, und darin in Längsrichtung und/oder in Querrichtung verpresst, sodass das Produkt-Stück den gesamten inneren Freiraum des Formrohres ausfüllt und somit auch dessen Querschnitt annimmt, also ein gleichmäßiges Produkt-Kaliber bildet.

Hierfür kann der in Querrichtung liegende innere Querschnitt des Formrohres nach Einlegen des Produkt-Stückes verändert werden, beispielsweise indem zwei einander gegenüberliegende Längswände des Formrohres so weit in einer ersten Querrichtung aufeinander zu bewegt werden, dass eine Querverpressung des Produkt-Stückes bewirkt wird. Dabei ist jedoch zumindest eine Querschnitts-Begrenzung oder ein aktives Querverpressen auch in einer zweiten Querrichtung notwendig, was dann jedoch einen in seiner Breite sich automatisch einstellenden Quer-Pressstempel erfordert oder verschieden breite Quer-Pressstempel, wobei dann die Längswände nur auf bestimmte definierte Abstände zueinander eingestellt werden dürfen.

Eine Längsverpressung mittels eines in axialer Richtung in das Formrohr dicht einfahrbaren Längs-Pressstempels, welcher das Produkt-Stück in Längsrichtung gegen einen Anschlag presst, ist ohnehin obligatorisch.

Eine Aufschneide-Maschine mit einem entsprechenden Formrohr ist beispielsweise aus der DE 102020134505.4 bekannt.

Die Druckschrift DE 24 46 959 A1 offenbart eine Formrohr-Einheit gemäß dem Oberbegriff des Anspruchs 1. Ferner wird auf die Druckschrift EP 0 521 179 A1 hingewiesen.

### III. Darstellung der Erfindung

### a) Technische Aufgabe

Es ist daher die Aufgabe gemäß der Erfindung, ein Verfahren sowie eine Formrohr-Einheit zum Umformen und Verpressen des Produkt-Stückes zur Verfügung zu stellen, welches die beschriebenen Nachteile vermeidet, insbesondere ein stufenloses Querverpressen ermöglicht.

### b) Lösung der Aufgabe

Diese Aufgabe wird durch die Merkmale der Ansprüche 1, 13 und 14 gelöst. Vorteilhafte Ausführungsformen ergeben sich aus den Unteransprüchen.

Eine gattungsgemäße Formrohr-Einheit umfass das Formrohr selbst, welches einen von der einen zur anderen Stirnseite, der Längsrichtung, durchgängig offenen Formhohlraum mit variablen Querschnitt dadurch aufweist, dass die in Umfangsrichtung aneinandergrenzenden und den Formhohlraum umfänglich umgebenden Längswände relativ zueinander in Querrichtung beweglich sind.

Ferner umfasst die Formrohr-Einheit einen Grundkörper - der auch Teil des Formrohres sein kann - sowie ein Betätigungselement zum Bewegen der Längswände relativ zueinander.

Erfindungsgemäß sind alle Längswände bzgl. des Grundkörpers beweglich angeordnet, und insbesondere ist der Grundkörper nicht Teil des Formrohres, also enthält keine der Längswände.

Ferner ist keine der Längswände in ihrem quer zur Längsrichtung gemessenen Querschnitt verstellbar, sondern der Querschnitt des Formhohlraumes ist veränderbar, indem die Längswand, vorzugsweise alle Längswände, jeweils breiter sind als die Dimension des Formhohlraumes in dieser Richtung, auch dessen maximale Dimension.

Dadurch können die Längswände sehr einfach ausgestaltet sein.

Vorzugsweise ist der Grundkörper um das Formrohr herum angeordnet, insbesondere ein das Formrohr umfänglich, also um die Längsrichtung herum, umgebender, vorzugsweise konzentrisch umgebender Grundkörper-Ring, insbesondere ein Grundkörper-Kreisring, oder eine Grundkörper-Hülse, was einen sehr einfachen, weitgehend symmetrischen, Aufbau der gesamten Formrohr-Einheit ermöglicht.

Das Formrohr und dessen Längswände sind so gestaltet und miteinander verbunden, dass bei Relativbewegung der Längswände zueinander sich die Querschnittsform des Formhohlraumes und damit auch die Längswände um dessen Längsmittellinie drehen können.

Dadurch wird eine größtmögliche Variabilität der Formrohr-Einheit geboten. Vorzugsweise sind je zwei in Umfangsrichtung benachbarte Längswände aneinander verschieblich geführt entlang einer in einer Querrichtung verlaufenden Wand-Führung, die vorzugsweise so ausgebildet ist, dass die beiden aneinander geführten Führungs-Teile der beiden Längswände nur in Verlaufsrichtung der Wandführung zueinander beweglich sind aber nicht quer zur Verlaufsrichtung der Wandführung voneinander entfernt werden können, jedenfalls nicht im Längenbereich der Wandführung.

Vorzugsweise ist die Wandführung als formschlüssige Wandführung ausgebildet, etwa in Form einer hinterschnittenen Führungsnut als dem einen Führungs-Teil und einem darin verschiebbaren Nutenstein als dem anderen Führungs-Teil.

Dadurch werden die Längswände hoch belastbar und können einen erheblichen Pressdruck aus das im Formhohlraum aufgenommene Produkt-Stück ausüben.

Die Längswände können sich auf unterschiedliche Weise relativ zum Grundkörper bewegen.

Bei einer ersten Bauform sind die Längswände gegenüber dem Grundkörper schwenkbar befestigt, je um eine eigene, in Längsrichtung verlaufende, erste Schwenkachse.

Vorzugsweise ist bei einer geraden Anzahl von Längswänden jede zweite Längswand auf diese Art und Weise am Grundkörper schwenkbar befestigt.

Zusätzlich ist jede dieser schwenkbaren am Grundkörper befestigten Längswände zusätzlich an einem Schwenkhebel schwenkbar befestigt, der an einer von der ersten Schwenkachse beabstandeten zweiten Schwenkachse, die ebenfalls in Längsrichtung verläuft, an der Längswand angreift. Mit diesem Schwenkhebel wird das Ausmaß des Verschwenkens der Längswand relativ zum Grundkörper bewirkt und eingestellt.

Jeder dieser Schwenkhebel ist an seinem anderen Ende an einem gemeinsamen Betätigungselement schwenkbar befestigt, wiederum jeweils um eine in Längsrichtung verlaufende Basis-Schwenkachse.

Durch Bewegen dieses gemeinsamen Betätigungselementes relativ zum Grundkörper werden alle Schwenkhebel betätigt und alle mit den Schwenkhebeln befestigten Längswände verschwenkt. Auf diese Art und Weise ist eine sehr einfache Veränderung des Querschnittes des Formhohlraumes möglich.

Insbesondere sofern alle Längswände mit je einem Schwenkhebel gelenkig verbunden sind, müssen alle ersten Schwenkachsen auf einem Kreis, dem ersten Schwenkachsen-Kreis, liegen. Bei vier ersten Schwenkachsen sollten diese vier Schwenkachsen bei Betrachtung in axialer Richtung dann allerdings ein Quadrat bilden, denn sonst würde eine geometrische Überbestimmung der Einheit eintreten.

Falls jede Längswand über eine solche zweite Schwenkachse und einen Schwenkhebel mit dem gemeinsamen Betätigungselement verbunden ist, sollte wenigstens eine der Schwenkachsen jedes Schwenkhebels und/oder die erste Schwenkachse an der Längswand eine Bewegungsmöglichkeit quer zu ihrer Verlaufsrichtung aufweisen, da ansonsten ebenfalls eine geometrische Überbestimmung eintritt, wenn z.B. bei vier ersten Schwenkachsen diese bei axialer Betrachtung kein Quadrat bilden.

Auf jeden Fall sollten bei axialer Betrachtung alle ersten Schwenkachsen auf einem ersten Schwenkachsen-Kreis liegen und/oder alle zweiten Schwenkachsen auf einem zweiten Schwenkachsen-Kreis liegen und dann bei vier ersten Schwenkachsen diese bei axialer Betrachtung zumindest ein Rechteck, besser ein Quadrat, bilden.

Das Betätigungselement für die Schwenkhebel ist erfindungsgemäß ein das Formrohr umgebender, insbesondere konzentrisch umgebender, Betätigungsring, der um seine Längsmittellinie, insbesondere die Längsmittellinie des Innenraumes des Formhohlraumes des Formrohres, gegenüber dem Grundkörper verdrehbar ist.

Damit werden durch Betätigen des gemeinsamen Betätigungselementes alle Schwenkhebel auf einmal betätigt.

Als Stellelement zum Betätigen des Betätigungselementes wird vorzugsweise ein gesteuert antreibbares Stellelement wie etwa ein Arbeitszylinder verwendet, wobei das Stellelement in einer Querrichtung zur Längsrichtung beweglich sein sollte, bei einem Betätigungsring insbesondere tangential zum Betätigungsring beweglich sein sollte.

Bei einer zweiten Bauform sind die Längswände bei axialer Betrachtung über den Grundkörper nicht verschwenkbar, sondern radial linear verfahrbar.

Hierfür muss wenigstens eine Längswand, vorzugsweise bei einer geraden Anzahl von Längswänden jede zweite Längswand, gegenüber dem Grundkörper in einer Querrichtung, insbesondere radial zur Längsmittellinie, linear verfahrbar geführt sein.

In dieser Gruppe von gegenüber dem Grundkörper linear geführten Längswänden ist jede Längswand mit einem gemeinsamen Betätigungselement zum Bewegen jeder dieser Längswände wirkverbunden.

Die übrigen Längswände sind mit einem für diese zweite Gruppe gemeinsamen, anderen Betätigungselement wirkverbunden.

Auf diese Art und Weise können - zumindest bei einer geraden Anzahl von Längswänden - die beiden Gruppen von Längswänden individuell in Querrichtung, insbesondere radial, verstellt werden und damit bei beispielsweise vier Längswänden nicht nur die Größe des Querschnitts, sondern auch die Relationen der Abmessungen des Querschnittes des Formhohlraumes verändert werden.

Auch hierbei sind je zwei benachbarte Längswände mit einer bereits beschriebenen Wandführung aneinander geführt, wobei vorzugsweise die Längswände einer der beiden Gruppen zweiteilig ausgebildet ist, wobei das eine Längswand-Teil, das sogenannte Führungs-Teil, die Wandführung enthält du das andere Längswand-Teil, das Antriebs-Teil, mit dem Betätigungselement verbunden ist.

Führungs-Teile und Antriebs-Teil sind relativ zueinander beweglich, insbesondere zueinander verschwenkbar oder formschlüssig linear verfahrbar aneinander geführt.

Auf diese Art und Weise sind sehr individuelle Veränderungen des Querschnitts des Formhohlraumes möglich.

Bei einer Aufschneide-Maschine, die eine solche Formrohr-Einheit zum Umformen des Produktstückes aufweist und darüber hinaus eine Schneideinheit zum Aufschneiden der Produkt-Stücke in Scheiben sowie eine Abförder-Einheit zum Abfördern der abgetrennten Scheiben einschließlich einer Steuerung zum Steuern beweglicher Teile der Aufschneide-Maschine, ist die Formrohr-Einheit wie zuvor beschrieben ausgebildet.

Hinsichtlich des Verfahrens zum Umformen eines unregelmäßig geformten, insbesondere länglichen, Produkt-Stückes aus einem teilweise elastischen Material durch Verpressen des Produkt-Stückes zumindest in einer Querrichtung zu einem hinsichtlich des Querschnittes über die Länge gleichbleibenden Produkt-Kaliber wird so vorgegangen, dass das Verlagern der relativ zueinander beweglichen Längswände so erfolgt, dass die Längswände sich - sei es linear oder durch eine Schwenkbewegung oder eine andere Bewegung - sich der Längsmitte, insbesondere der Längsmittellinie, des Formhohlraumes nähern, dabei den gegenseitigen Kontakt jedoch nicht verlieren.

Dadurch ist sichergestellt, dass das Formrohr umfänglich geschlossen bleibt und in Umfangsrichtung keine Bestandteile des Produkt-Stückes herausgedrückt werden können.

Vorzugsweise erfolgt das Verlagern dabei so, dass die Relationen des Querschnittes des Formhohlraumes und seine prinzipielle Form währen der Bewegung der Längswände nicht verändert wird, also ein rechteckiger Querschnitt mit einem Seitenverhältnis von 4:3 dieses Seitenverhältnis und die Rechteckform beibehält.

Vorzugsweise werden bei einer geraden Anzahl von Längswänden der Längsmittellinie des Formhohlraumes einander gegenüberliegenden Paare von Längswänden, insbesondere die Gruppe der jeweils zweiten Längswände, synchron mittels des Betätigungselementes entlang jeweils identischer Bewegungswege bewegt, insbesondere mittels des gemeinsamen Bewegungselementes.

Vorzugsweise können auch alle Längswände synchron entlang jeweils identischer Bewegungswege bewegt werden, wofür allerdings ein punktsymmetrischer, insbesondere quadratischer, Querschnitt des Formhohlraumes notwendig ist.

Auf diese Art und Weise wird das im Formhohlraum aufgenommene Produkt-Stück gleichmäßig in allen radialen Querrichtungen verpresst, was besonders schonend für die Struktur des Produkt-Stückes ist.

### c) Ausführungsbeispiele

Ausführungsformen gemäß der Erfindung sind im Folgenden beispielhaft näher beschrieben. Es zeigen:
- **Figur 1a** - **c:**: eine bekannte Maschine zum Verpressen und Aufschneiden von Laiben in der Seitenansicht im Teilschnitt in unterschiedlichen Funktionsstellungen,
- **Figur 2a:**: eine bekannte Bauform eines Formrohres in der Seitenansicht im Schnitt,
- **Figur 2b:**: das Formrohr der **Figur 2a** geschnitten entlang der dortigen Linie B - B,
- **Figur 2c:**: das Formrohr der **Figur 2a** geschnitten entlang der dortigen Linie C - C,
- **Figur 2d:**: ein bekanntes, mehrspuriges Formrohr mit veränderlicher Breite
- **Figur 3a, b:**: eine erste Bauform eines erfindungsgemäßen Formrohres, betrachtet in axialer Richtung, in zwei verschiedenen Funktionsstellungen,
- **Figur 4a, b**:: eine zweite Bauform eines erfindungsgemäßen Formrohres, betrachtet in axialer Richtung, in zwei verschiedenen Funktionsstellungen.

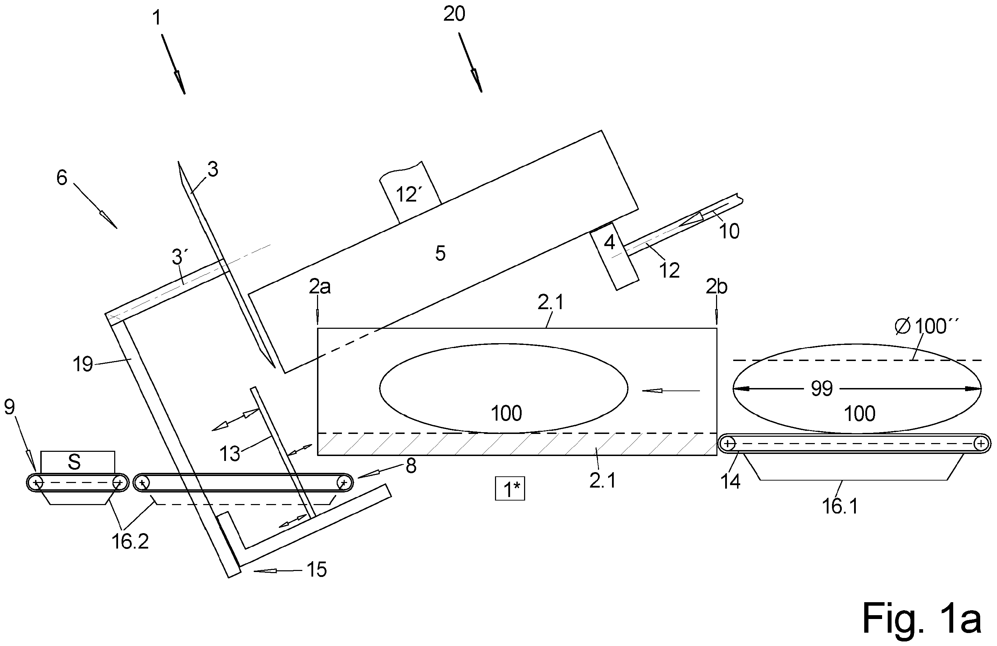

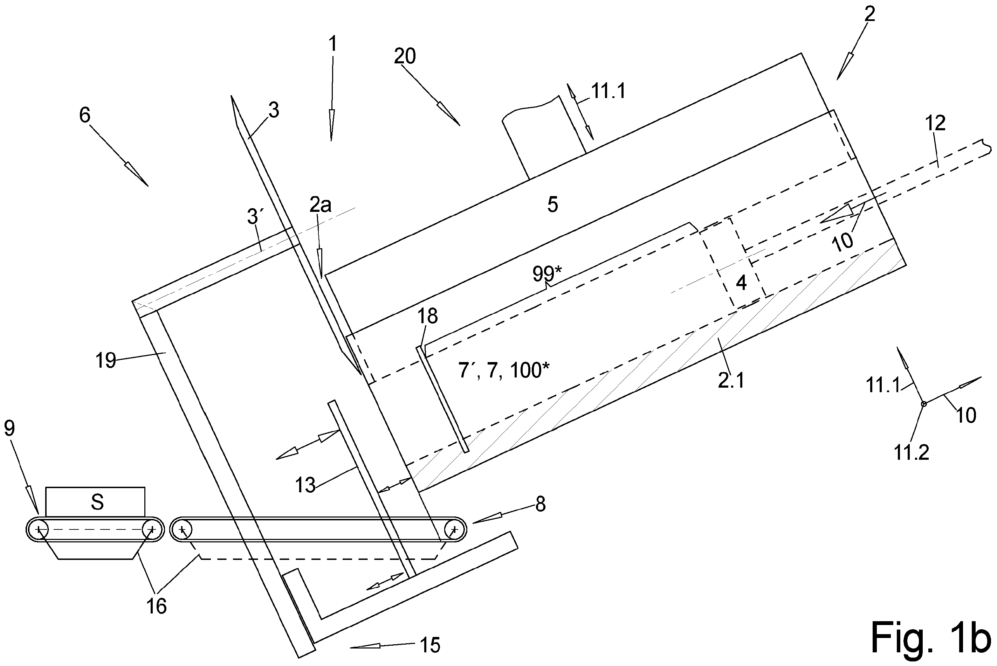

In den **Figuren 1a****,** **b** ist - wie am besten in **Figur 1b** zu erkennen - die gesamte Aufschneide-Maschine 1 dargestellt, die außer der Formrohr-Einheit 2 mit dem Formrohr 20 - siehe **Figur 1b** - und den Pressstempeln 4, 5 eine Schneideinheit 6 umfasst zum Abtrennen von Scheiben 101 von dem verpressten Produkt-Kaliber 100*.

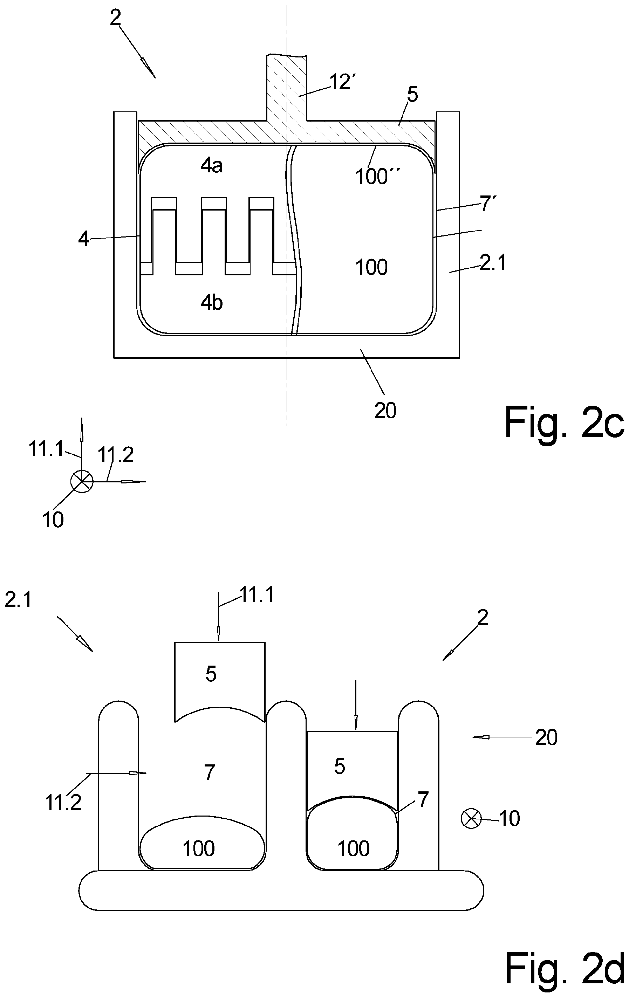

Wie **Figur 2c** zeigt, besteht das stirnseitig vorne und hinten offene, bekannte, Formrohr 20 aus einer im Querschnitt U-förmigen Formrohr-Rinne 2.1, in die von der offenen Seite her, in der Regel von oben, passgenau ein Quer-Pressstempel 5 eintauchen kann, die gemeinsam das Formrohr 20 bilden.

Hinsichtlich des Formrohres 2 ist weiter zu erkennen, dass das Formrohr 20 in **Figur 1b** schräg nach unten abwärtsgerichtet angeordnet ist, und zusätzlich nahe des Schneid-Endes 2a des Formrohres 20 eine Zwischenplatte 18 so im Formrohr 20 eingebracht werden kann, dass sie dessen gesamten freien Querschnitt 7' seines inneren Freiraumes, des Formhohlraumes 7, verschließt. Dies dient dazu, um beim Verpressen des Produkt-Stückes 100 dieses nicht gegen die an das Formrohr 20 herangefahrene Anschlagplatte13 verpressen zu müssen, sondern gegen die stabiler im Formrohr 20 selbst gelagerte Zwischenplatte 18.

Da deren Position in Längsrichtung 10 bekannt ist, kann aus den Positionen des Quer-Pressstempels 5 und eines Längs-Pressstempel 4 in deren Pressrichtungen 10, 11.1 im verpressten Zustand auf die Länge 99 des Produkt-Stückes 100 in Längsrichtung 10 und dessen Querschnittsfläche 100" und Gestaltung der Querschnittsfläche in den Querrichtungen 11.1, 11.2, die im rechten Winkel zueinander und lotrecht zur Längsrichtung 10 stehen, geschlossen werden. Die Pressstempel 4, 5 sind beispielsweise am freien Ende einer sie bewegenden Kolbenstange 12 bzw. 12' befestigt.

Wie **Figur 1a** zeigt, ist die Formrohr-Rinne 2.1 zum Erleichtern des Beladens herabklappbar in eine horizontale Lage um eine in ihrem vorderen Bereich, hier der Unterkante am Schneid-Ende 2a des Formrohres 20 gelegene, in der zweiten Querrichtung 11.2 verlaufende Schwenkachse, während Quer-Pressstempel 5 und Längs-Pressstempel 4 in der ursprünglichen Lage verbleiben.

In dieser herabgeklappten Lage der Formrohr-Rinne 2.1 kann - etwa mittels des dargestellten Zuförderers 14 - ein neues Produkt-Stück 100 vom hinteren, beladeseitigen Ende 2b an die Formrohr-Rinne 2.1 herangefahren und in diese eingeschoben werden.

Dabei kann durch z.B. eine von oben auf den stromaufwärts der Formrohr-Rinne 2.1 angeordneten Zuförderer 14 gerichtete Lichtschranke beim Durchfahren des Produkt-Stückes 100 zumindest dessen Anfang und dessen Ende detektiert werden, woraus aufgrund der Geschwindigkeit des Zuförderers 14 die Länge 99 des Produkt-Stückes 100 im unverpressten Zustand bekannt ist.

Das Gewicht kann ermittelt werden, indem der Zuförderer 14 mit einer Waage 16.1 ausgestattet ist.

Aus Gewicht und der Länge 99 kann die Steuerung 1* den durchschnittlichen Querschnitt ( 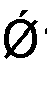 100") des unverpressten Produkt-Stückes 100 errechnen.

Anschließend wird die Formrohr-Rinne 2.1 mit dem Produkt-Stück 100 wieder nach oben in die Pressstellung, parallel verlaufend zur Längs-Pressrichtung 10 des Längs-Pressstempels 4 geschwenkt, wobei sich der Quer-Pressstempel 5 und Längs-Pressstempel 4 jeweils in ihrer maximal zurückgezogenen Position befinden, in der sie gerade noch in diese Formrohr-Rinne 2.1 eintauchen, um beim Hochschwenken der Formrohr-Rinne 2.1 nicht mit dem darin befindlichen unverpressten Produkt-Stück 100 zu kollidieren.

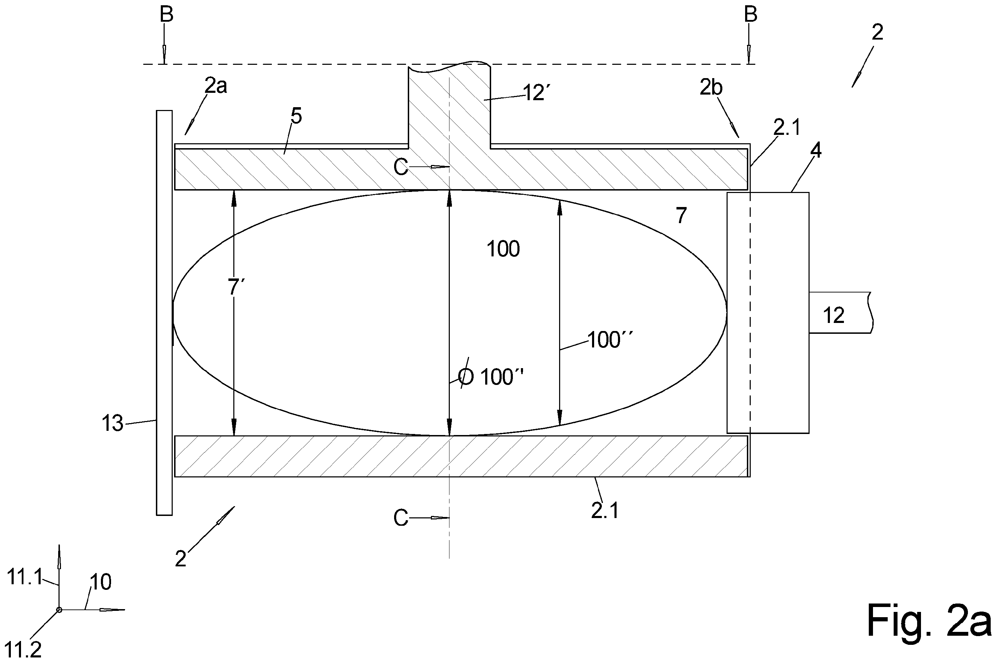

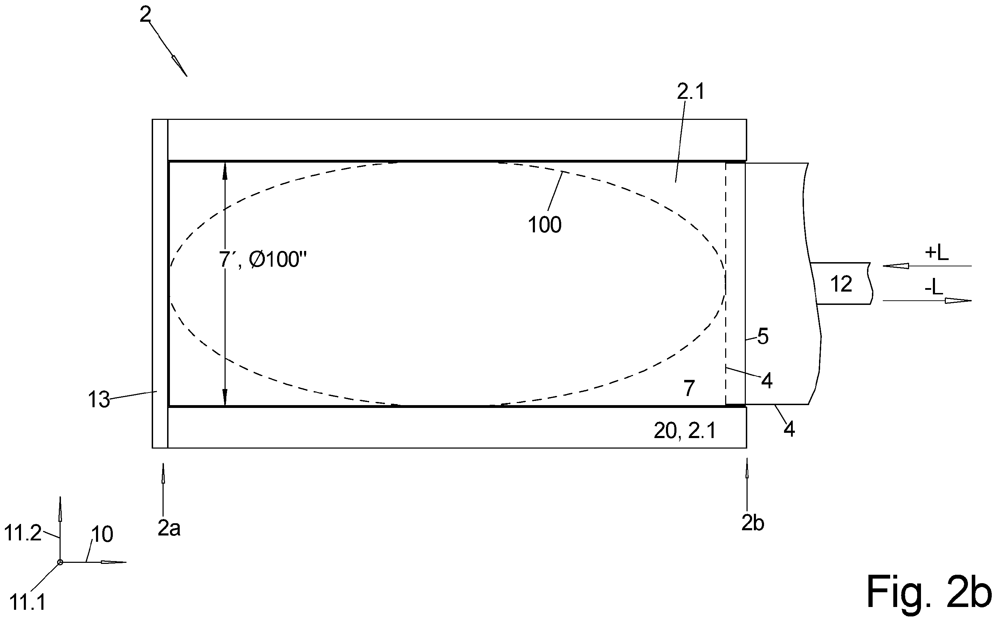

Die **Figuren 2a** **und** **2b** zeigen das bekannte Formrohr 20 alleine in PrinzipDarstellung in einem vertikalen Längsschnitt und in der Aufsicht von oben.

Wie **Figur 2c** erkennen lässt, verlaufen die Innenflächen der Seitenwände der U-förmigen Formrohr-Rinne 2.1 parallel zueinander, und in **Figur 2c** in einem nicht veränderbaren Abstand zueinander, sodass der Quer-Pressstempel 5 in Richtung der Breite der Öffnung der Formrohr-Rinne 2.1, der zweiten Querrichtung 11.2, eine fixe Breite besitzen kann, und ebenso in der Längsrichtung 10 eine fixe Länge besitzen kann, nämlich z.B. entsprechend der Länge der Formrohr-Rinne 2.1.

In **Figur 2a** ist der Quer-Pressstempel 5 auf seinen solchen Abstand zum Boden der Formrohr-Rinne 2.1 herangefahren, dass der freie Querschnitt 7' dazwischen noch fast dem größten Querschnitt des unverpressten Produkt-Stückes 100 entspricht. Folglich ist dadurch das Produkt-Stück 100 in Querrichtung 11.1 bereits etwas zusammengedrückt, und besitzt eine Länge die - ohne Presskraft in Längsrichtung 10 - etwas größer ist als die Länge 99* im unverpressten Zustand.

Das Produkt-Stück 100 besitzt aber qualitativ immer noch gemäß seinem Ausgangszustand eine etwa länglich-eiförmige Form oder auch die Form eines American Football, mit einem Querschnitt 100", der sich in Längsrichtung 10 ändert und im mittleren Längenbereich immer noch größer ist als an seinen Enden.

Mit einer solchen Einstellung des inneren freien Querschnitt 7' wird anschließend gemäß **Figur 1b** das Produkt-Stück 100 zunächst gegen die Zwischenplatte 18 oder gemäß **Figur 2b** gegen die Anschlagplatte 13 am vorderen Ende 2a des Formrohres 20 mittels des Längs-Pressstempels 4 vorwärts geschoben.

Erst durch weiteres Vorwärtsfahren der Pressstempel 4, 5 erfolgt dann das Verpressen des Produkt-Stückes 100 zu dem in **Figur 1b** eingezeichneten Produkt-Kaliber 100* in Längsrichtung 10, bis der gesamte Form-Hohlraum 7 des Formrohres 20 bis zum Anschlag 13 oder 18 vom Material des Produkt-Stückes 100 ausgefüllt ist und welches dann eine deutlich geringere Länge 99* besitzt.

Das Vermessen der Länge und des Querschnittes des Produkt-Kalibers 100* im verpesten Zustand wird jedoch wie beschrieben nicht mit der Kraft, insbesondere am Längs-Pressstempel 4, durchgeführt, die zum Verpressen notwendig war, sondern mit einer demgegenüber deutlich geringeren Messkraft.

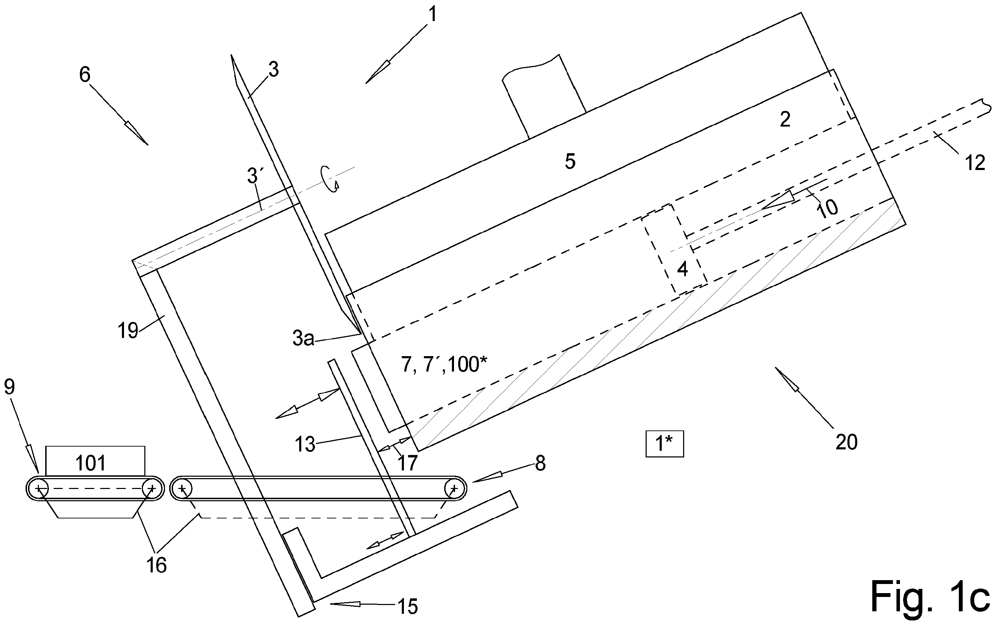

**Figur 1c** zeigt das - nach Entfernen der Zwischenplatte 18 - anschließende automatische Aufschneiden des verpressten Produkt-Kalibers 100* in Scheiben 101:
Hierzu wird - nach Entfernen der Zwischenplatte 18 - das verpresste Produkt-Kaliber 100* mittels des Längs-Pressstempels 4 mit einer Aufschneidekraft, die vorzugsweise der Messkraft entspricht, weiter vorwärts geschoben, und zwar über das Schneid-Ende 2a des Formrohres 20 um eine gewünschte Scheiben-Dicke hinaus, indem das Produkt-Kaliber 100* mit seiner vorderen Stirnfläche an einer auf einen entsprechenden Abstand 17 zum Formrohr 20 eingestellten Anschlagplatte 13 anliegen sollte.

Wenn in Längsrichtung 10 die Stellung des Produkt-Kalibers 100* zum Abtrennen der nächsten Scheibe 101 auf diese Art und Weise erreicht ist, taucht die Schneidkante 3a eines in diesem Fall um eine Messerachse 3' rotierenden, runden oder sichelförmigen, Messers 3 zunehmend in Querrichtung 11.1 in den Querschnitt des Produkt-Kalibers 100* ein und trennt eine Scheibe 101 ab.

Beim Eintauchen des Messers 3 wird auch die Anschlagplatte 13 in der gleichen Querrichtung bewegt, sodass die abgetrennte Scheibe 101 über die Oberkante der Anschlagplatte 13 herabkippen und auf den unmittelbar darunter befindlichen Abförderer 8 fallen kann, der diese abtransportiert und an einen weiteren Abförderer 9 übergibt.

Einer der beiden Abförderer, vorzugsweise der nachgelagerte Abförderer 9, umfasst eine Waage 16 zum Wiegen der einzelnen erzeugten Scheiben 101, und deren Gewicht wird an die Steuerung 1* der Maschine 1 rückgemeldet zum automatischen Korrigieren der Dicke der nachfolgenden Scheiben 101 durch Verändern des Abstandes 17.

**Figur 1c** zeigt den Zustand, in dem das Produkt-Kaliber 100* bereits teilweise in Scheiben101 aufgeschnitten ist.

Zu diesem Zweck sind sowohl das Messer 3 als auch die Anschlagplatte 13 beweglich an einem Grundgestell 15 der Schneideinheit 6 montiert, entlang dem die Anschlagplatte 13 in Längsrichtung 10 in ihrem Abstand 17 verstellbar ist, und entlang dem auch das an einem Tragarm 19 gehaltene Messer 3 zumindest in einer der Querrichtungen zur Längsrichtung 10, vorzugsweise der ersten Querrichtung 11.1, der Quer-Pressrichtung des Quer-Pressstempels 5, verfahrbar sein kann.

Wenn der Längs-Pressstempel 4 - der ja beim Verpressen oder Vorwärtsschieben zwischen dem Quer-Pressstempel 5 und der Formrohr-Rinne 2.1 angeordnet ist - unabhängig von der Position des Quer-Pressstempels 5 in Quer-Pressrichtung, der 1. Querrichtung 11.1, den freien Querschnitt 7' zwischen der Formrohr-Rinne 2.1 und dem Quer-Pressstempel 5 immer vollständig ausfüllen soll, muss er beispielsweise - wie in **Figur 2c**, **linke Hälfte** dargestellt - aus zwei Teilen 4a, 4b bestehen, die auf der einander zugewandten Seite abwechselnd Zinken und Ausnehmungen aufweisen, die ineinander eintauchen, so dass dadurch der Quer-Pressstempel 5 seine Erstreckung in dieser Querrichtung 11.1 verändern kann, was automatisch geschieht, da die beiden Teile 4a, b mittels Federn in die voneinander wegweisende Richtung vorgespannt sind.

**Figur 2d** zeigt, wie zum Aufschneiden von zwei Produkt-Stücken 100 nebeneinander zwei Formrohr-Rinnen 2.1 nebeneinander vorhanden sein können. Dabei ist die mittlere von drei von einem Boden der Formrohr-Rinne 2.1 aufragenden Längswänden fest, insbesondere einstückig, mit diesem verbunden, während sich die beiden äußeren Längswände dagegen in der 2. Querrichtung 11.2 in ihrem Abstand zu dieser verstellen lassen von einem großen Abstand zum Einlegen des Produkt-Stückes 100 zu einem kleineren zum anschließenden Verpressen des Produkt-Stückes 100, der dann auch der Breite des von oben in die jeweilige Formrohr-Rinne 2.1 einzufahrenden Quer-Pressstempels 5 entspricht.

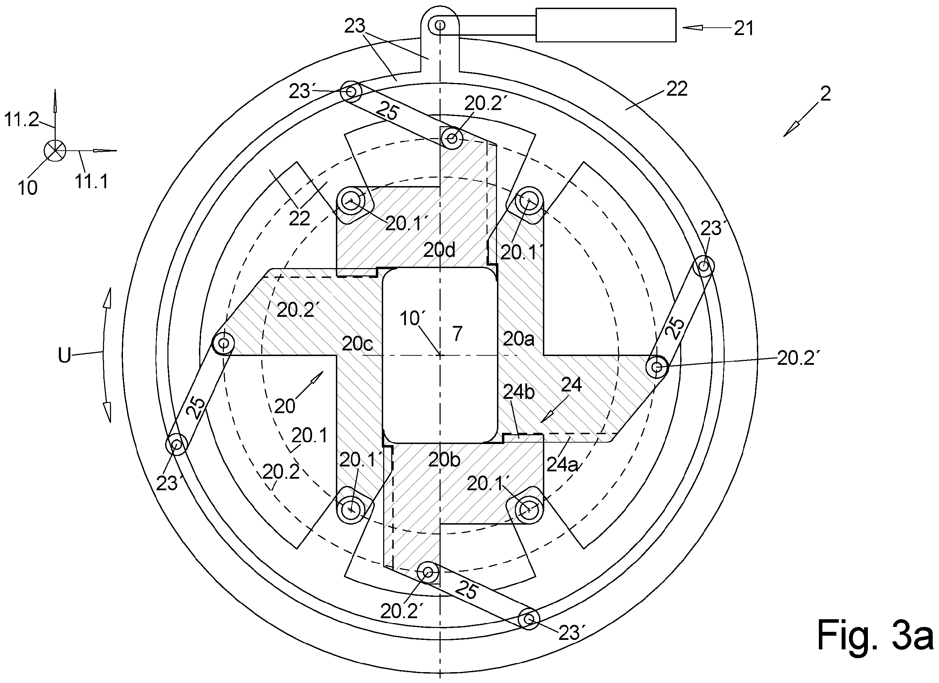

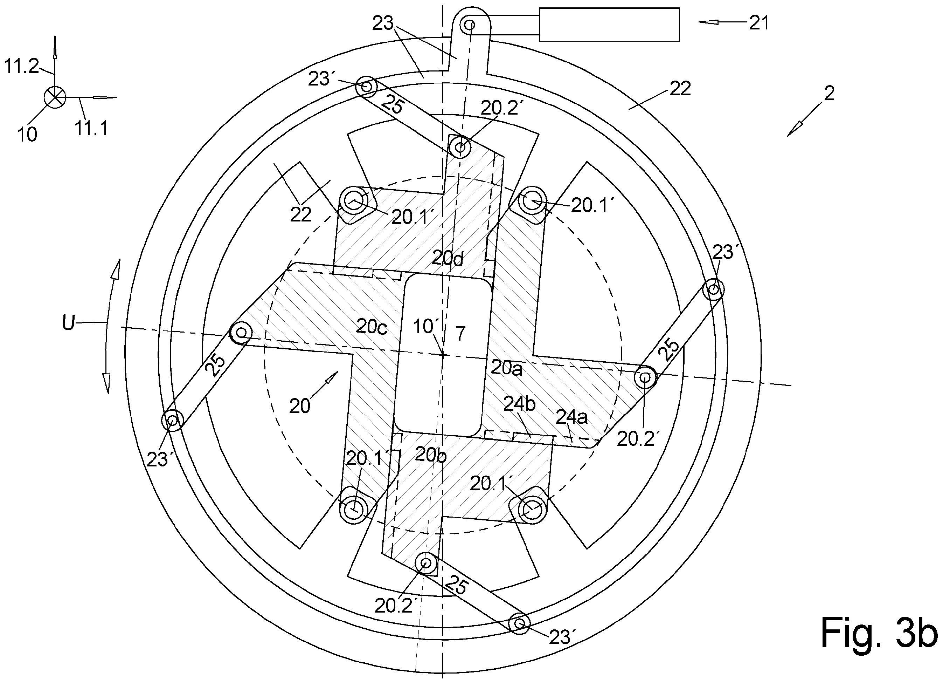

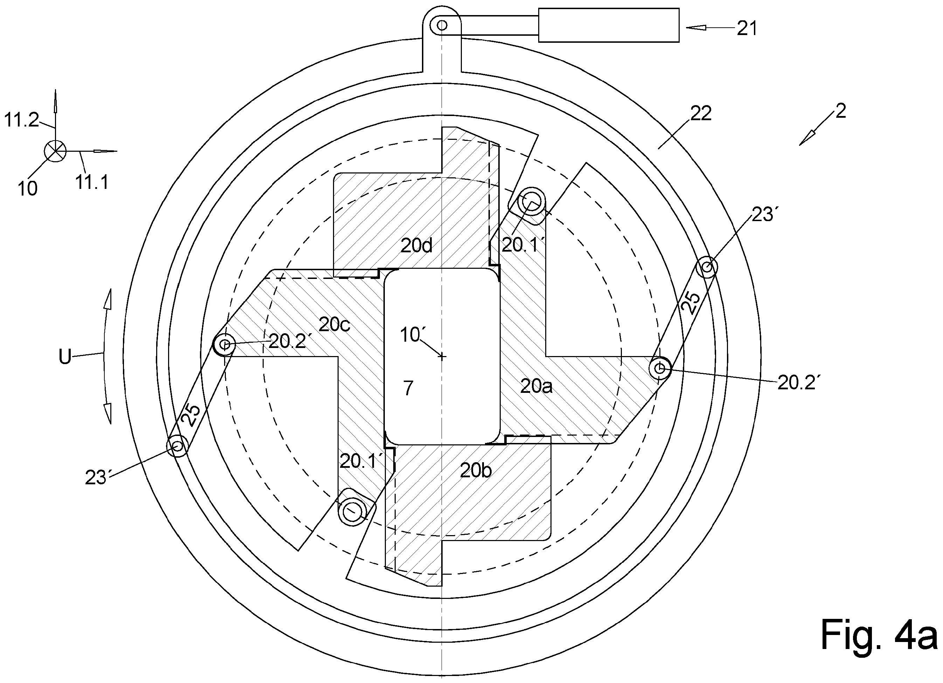

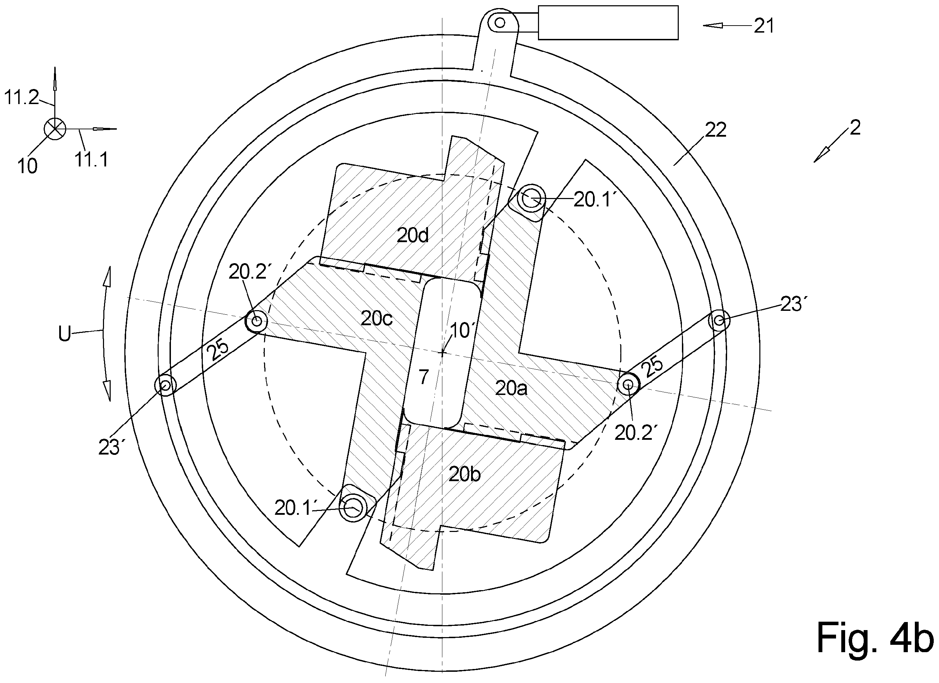

Die **Figuren 3a****,** **b** **und** **4a****,** **b** zeigen zwei verschiedene erfindungsgemäße Bauformen einer Formrohr-Einheit 2 gegenüber der bekannten Bauform der **Figuren 2c****, d.**

Die **Figuren 3a** bis **4b** zeigen das erfindungsgemäße Formrohr 20 jeweils betrachtet in axialer Richtung 10, also von der einen zur anderen offenen Stirnseite, wobei jeweils vier in dieser axialen Richtung, der Längsrichtung 10, verlaufende Längswände 20a bis 20d, die den Formhohlraum 7 umfänglich umgeben und die jeweils eine vorzugsweise ebene, den Formhohlraum 7 begrenzende, Kontaktfläche aufweisen, mit dem sie später an dem in den Formhohlraum 7 eingelegten Produkt-Stück 100 anliegen.

Dementsprechend besitzt der Formhohlraum 7 einen rechteckigen Querschnitt, in diesem Fall mit abgerundeten Ecken aufgrund eines entsprechenden, eine Innenrundung aufweisenden Endkantenbereichs, der jeweiligen Kontaktfläche jedes der Längswände 20a - d.

Die Kontaktflächen stehen - bei vier Längswänden 20a - d - dabei im Wesentlichen im rechten Winkel zueinander und werden in diesem Winkel auch gehalten, indem je zwei benachbarte Längswände 20a, b, 20b, c usw. über eine Wandführung 24 so miteinander verbunden sind, dass bei Relativbewegung der benachbarten Längswände z.B. 20b, 20c zueinander der Zwischenwinkel zwischen den Kontaktflächen erhalten bleibt, in diesem Fall bei 90° bleibt. Dabei wird die eine der beiden Längswände, z.B. 20c jedoch in Richtung auf die Längsmittellinie 10' des Formhohlraumes hin relativ zur damit verbundenen Längswand 20d verschoben.

Die Längsmittellinie 10' liegt bei punktsymmetrischen Querschnittsformen des Formhohlraumes 7 auf dessen Symmetrieachse, ansonsten auf dem Schwerpunkt des Querschnittes des Formhohlraumes 7.

Bei einem Rechteck wie hier dargestellt liegt die Längsmittellinie 10' auf dem Kreuzungspunkt der beiden Diagonalen durch den rechteckigen Formhohlraum 21.

Die Längsführung 24 ist in diesem Fall vorzugsweise realisiert durch eine hinterschnittene Nut 24a in einer der in radialer Richtung verlaufenden Außenseiten der Längswand, die der benachbarten Längswand benachbart ist, sowie einem Nutenstein 24b, der an der benachbarten Längswand ausgebildet ist und entlang der hinterschnittenen Nut 24a verfahrbar ist. Die Nut mündet in der radialen Außenseite der Längswand, von wo aus der Nutenstein 24 b eingeführt werden kann, geht jedoch nicht bis zu der Kontaktfläche der Längswand durch.

Das Formrohr 20 ist von einem in dieser Darstellung kreisringförmigen, in der Praxis meist hohlzylindrischen, Grundkörper 22 konzentrisch umgeben.

Dieser Grundkörper 22, insbesondere Grundkörperring, weist in diesem Fall nach radial innen vorstehende Vorsprünge auf, und je nach Bauform sind einige oder auch alle der Längswände 20a - d gegenüber dem Grundkörper 22, hier dem entsprechenden Vorsprung des Grundkörperringes 22, schwenkbar um eine in axialer Richtung 10 verlaufende erste Schwenkachse 20.1' verschwenkbar.

All diese direkt gegenüber dem Grundkörper 22 schwenkbar befestigten Längswände 20a - d sind über je einen Schwenkhebel 25 mit einem Betätigungselement 23 gelenkig verbunden. Das Betätigungselement 23 ist hier ebenfalls in der Darstellung ringförmig, in der Praxis vorzugsweise zylindrisch ausgebildet und konzentrisch zur Längsmittellinie 10' des Formhohlraumes 7 angeordnet, vorzugsweise drehbar um die Längsmittellinie 10' im Grundkörper 22 gelagert.

Jeder der Schwenkhebel 25 ist somit um eine in Längsrichtung 10 verlaufende zweite Schwenkachse 20.2' an je einer der Längswände 20a - d angelenkt und mit seinem anderen Ende um eine Basis-Schwenkachse 23' an dem für alle Schwenkhebel 25 gemeinsamen Betätigungselement 23 befestigt.

Wie nur in **Figur 3a** angedeutet, kann das Betätigungselement 23 gegenüber dem Grundkörper 22 in Umfangsrichtung U verstellt werden, beispielsweise gesteuert motorisch verstellt werden mittels eine Stellelementes 21, etwa eines Arbeitszylinders 21.

Bei der ersten Bauform gemäß der **Figuren 3a****,** b ist jede der Längswände 20a - d einerseits über eine erste Schwenkachse 20.1' direkt am Grundkörper gelenkig befestigt und andererseits über eine zweite Schwenkachse 20.2' mittels eines Schwenkhebels 25 gelenkig mit dem Betätigungselement 23 gelenkig verbunden.

Wird das Betätigungselement 23 ausgehend von der Stellung der **Figur 3a** um 5° im Uhrzeigersinn relativ zum Grundkörper 22 verschwenkt, so wird dadurch - wie in **Figur 3b** ersichtlich - der Formhohlraum 21 verkleinert, verbleibt aber rechteckig und insbesondere mit dem gleichen Verhältnis von Länge zu Breite seines Querschnittes. Zusätzlich dreht sich jedoch der Querschnitt des Formhohlraumes 7 ebenfalls in diese Richtung, also z.B. im Uhrzeigersinn um den gleichen Winkel.

Die einzelnen Längswände 20a - d bewegen sich dabei mit ihren Kontaktflächen in einer Schwenkbewegung um die ersten Schwenkachsen 20.1' in Richtung Längsmittellinie 10'.

Falls hierdurch geometrische Überbestimmungen auftreten, können diese durch Einbau von Spiel in Form von Langlöchern und darin verfahrbaren Bolzen als Schwenkachsen in zwei der einander gegenüberliegenden Längswände, nicht jedoch in den anderen beiden Längswänden, beseitigt werden.

Die **Figuren 4a****,** **b** zeigen eine zweite Bauform des erfindungsgemäßen Formrohres 20, die sich von der in den **Figuren 3a****,** **b** dadurch unterscheidet, dass nur in Umfangsrichtung U jede zweite der geraden Anzahl von Längswänden, also in diesem Fall die beiden Längswände z.B. 20a, 20c wie bzgl. **Figur 3a****,** **b** beschrieben, über erste Schwenkachsen 20.1' sowie zweite Schwenkachsen 20.2' und daran befestigten Schwenkhebeln 25 am Grundkörper 22 einerseits und dem Betätigungselement 23 andererseits befestigt sind.

Durch Betätigen des Betätigungselementes 23 werden also nur diese beiden Längswände 20a, c aktiv verlagert relativ zum Grundkörper 22.

Die beiden anderen Längswände 20b, d werden durch Zwangsführung automatisch mitverstellt, da sie ja mit jeder ihrer beiden benachbarten Längswände 20a, c beweglich verbunden sind über je eine Wandführung 24.

Dadurch bleiben die Winkel zwischen den Kontaktflächen der einzelnen Längswände zueinander bestehen, auch bei Verschwenken des Betätigungselementes 23 - wie für 5° entgegen dem Uhrzeigersinn in **Figur 4b** dargestellt - und auch der Querschnitt des Formhohlraumes 7 wird dadurch gedreht.

Der Vorteil der zweiten Bauform besteht darin, dass keine geometrischen Überbestimmungen auftreten können und bei nicht-selbsthemmender Ausbildung der Längsführungen 24 sich auch eine einfachere Bauform ergibt.

Bei beiden Bauformen erfolgt eine Veränderung der Größe des Querschnittes des Formhohlraumes 7 zentrisch bzgl. der Längsmittellinie 10', und zusätzlich eine Drehung um die Längsmittellinie 10', im Gegensatz zur bekannten Lösung der **Figuren 2c, 2d****,** bei denen die Bodenfläche der wannenförmigen Formrohr-Rinne 2.1 in Position verbleibt.

Der Vorteil der erfindungsgemäßen Bauform ist das schonendere Verpressen des im Formhohlraum 7 eingelegten Produkt-Stückes 100 durch die zentrisch in Richtung Längsmittellinie 10' wirkenden Presskräfte.

Falls die Verdrehung des Formhohlraumes 7 und/oder die Veränderung der Lage aller Innenflächen des Formhohlraumes 21, also Kontaktflächen aller Längswände 20a - d, als Nachteil gesehen wird, so kann dies durch eine einfache zusätzliche, am Grundkörper 22 angreifende und ebenfalls vom Betätigungselement 23 aus betätigte - nicht dargestellte - Mechanik kompensiert werden, sodass die Umfangsflächen des Formhohlraumes 7 ihre Winkellage zu X- und Y-Richtung im Raum auch bei Veränderung des Formhohlraumes 7 beibehalten und wenn gewünscht auch wenigstens eine der Innenflächen, also einer Kontaktfläche einer der Längswände, ihre Position beibehält, wenn die Größe des Querschnitts des Formhohlraumes 7 verändert wird.

### BEZUGSZEICHENLISTE

- 1: Aufschneide-Maschine
- 1*: Steuerung
- 2: Formrohr-Einheit
- 2.1: Formrohr-Rinne
- 2a: Schneid-Ende
- 2b: Belade-Ende
- 3: Messer
- 3': Messer-Achse
- 3": Messer-Ebene
- 3a: Schneidkante
- 4: Längs-Pressstempel
- 5: Quer-Pressstempel
- 6: Schneideinheit
- 7: innerer Freiraum, Formhohlraum
- 7': innerer freier Querschnitt
- 8: Abförderer
- 9: Abförderer
- 10: Längsrichtung, axiale Richtung, Vorschubrichtung
- 11.1: erste Querrichtung
- 11.2: zweite Querrichtung
- 12, 12': Kolbenstange
- 13: Anschlagplatte
- 14: Zuförderer
- 15: Grundgestell
- 16.1, 16.2: Waage
- 17: Abstand
- 18: Zwischenplatte
- 19: Tragarm
- 20: Formrohr
- 20.1: 1. Schwenkachsen-Kreis
- 20.2: 2. Schwenkachsen-Kreis
- 20a - d: Längswand
- 20.1': 1. Schwenkachse
- 20.2': 2. Schwenkachse
- 21: Stellelement, Arbeitszylinder
- 22: Grundkörper
- 23: Betätigungselement
- 23': Basis-Schwenkachse
- 24: Wandführung
- 24a, b: Führungs-Teile
- 25: Schwenkhebel

- 99: unverpresste Länge
- 99*: verpresste Länge
- 100: unverpresstes Produkt-Stück
- 100*: verpresstes Produkt-Kaliber
- 100": Querschnitt
- 100"max: maximaler Querschnitt
- 101: Scheibe

- U: Umfangsrichtung

## Patentansprüche

1. **Formrohr-Einheit** (2) zum Verformen eines unregelmäßig geformten Produkt-Stückes (100) aus einem elastischen Material, z.B. eines Fleisch-Stückes (100), in eine Form mit über seine Länge (99) gleichmäßigem Querschnitt (100"), mit
- einem Grundkörper (22),
- einem Formrohr (20), welches einen von der einen zur gegenüberliegenden Stirnseite, also in Längsrichtung (10), durchgängig offenen Formhohlraum (7) mit variablem Querschnitt aufweist, umfassend
- in Umfangsrichtung (U) aneinandergrenzenden, den Formhohlraum (7) umfänglich umgebenden, Längswänden (20 a - d),
- wobei die Längswände (20 a - d) in Querrichtung (11.1, 11.2) zur Längsrichtung (10) des Formrohres (20) relativ zueinander beweglich sind,
- einem gemeinsamen Betätigungselement (23) zum Bewegen der Längswände (20a - d),
- wobei alle Längswände (20a - d) bezüglich des Grundkörpers (22) beweglich angeordnet sind,
**dadurch gekennzeichnet, dass**
- das gemeinsame Betätigungselement (23) ein das Formrohr (20) umgebender Betätigungsring (23) ist, und
- der Betätigungsring um eine Längsmittellinie (10') des Formrohres (20) gegenüber dem Grundkörper (22) verdrehbar ist.

2. Formrohr-Einheit nach Anspruch 1,
**dadurch gekennzeichnet, dass**
- der Grundkörper (22) betrachtet in Längsrichtung (10) ein das Formrohr (20) umgebender, insbesondere konzentrisch umgebender, Grundkörper-Ring (22), insbesondere ein Grundkörper-Kreisring (22), ist
und/oder
- der Formhohlraum (7) bei Relativbewegung der Längswände (20 a - d) zueinander um die Längsmittellinie (10') dreht.

3. Formrohr-Einheit nach einem der vorhergehenden Ansprüche,
**dadurch gekennzeichnet, dass**
- je zwei in Umfangsrichtung (U) benachbarte Längswände (20a - d) entlang einer in einer Querrichtung (11.1, 11.2) verlaufenden Wand-Führung (24) aneinander geführt sind,
- insbesondere die Wandführung (24) so ausgebildet ist, dass die beiden aneinander geführten Führungs-Teile (24a, b) nur in Verlaufsrichtung der Wandführung (24) zueinander beweglich sind aber im Längenbereich der Wandführung (24) nicht quer zur Wandführung (24) voneinander entfernt werden können,
- insbesondere die Wandführung (24) eine formschlüssige Wandführung (24) ist,
- insbesondere in der Bauform mit einer hinterschnittenen Führungsnut (24a) und einem darin verschiebbaren Nutenstein (24b).

4. Formrohr-Einheit nach einem der vorhergehenden Ansprüche,
**dadurch gekennzeichnet, dass**
- wenigstens eine Längswand (20a - d) am Grundkörper (22) schwenkbar um eine erste, in Längsrichtung (10) verlaufende, erste Schwenkachse (20.1') befestigt ist,
- vorzugsweise bei einer geraden Anzahl von Längswänden (20a - d) jede zweite Längswand (20a - d) am Grundkörper (22) schwenkbar um eine erste, in Längsrichtung (10) verlaufende, erste Schwenkachse (20.1') befestigt ist.

5. Formrohr-Einheit nach Anspruch 4,
**dadurch gekennzeichnet, dass**
- jede der am Grundkörper (22) schwenkbar befestigten Längswände (20a - d), zusätzlich schwenkbar um eine, in Längsrichtung (10) verlaufende und von der ersten Schwenkachse (20.1') beabstandete, zweite Schwenkachse (20.2') an einem Schwenkhebel (25) befestigt ist,
- jeder Schwenkhebel (25) schwenkbar um eine in Längsrichtung (10) verlaufende Basis-Schwenkachse (23') an dem gemeinsamen Betätigungselement (23) befestigt ist,
- das Betätigungselement (23) beweglich gegenüber dem Grundkörper (22) ist.

6. Formrohr-Einheit nach Anspruch 4 und gewünschtenfalls nach Anspruch 5,
**dadurch gekennzeichnet, dass**
falls jede Längswand (20a - d) über eine zweite Schwenkachse (20.2') und einen Schwenkhebel (25) an dem gemeinsamen Betätigungselement (23) befestigt ist, wenigstens eine der Schwenkachsen des Schwenkhebels (25) und/oder die erste Schwenkachse (20.1') eine Bewegungsmöglichkeit quer zu ihrer Verlaufsrichtung aufweist, insbesondere quer zur Verlaufsrichtung der Wandführung (24) und/oder in Verlaufsrichtung der Wandführung (24).

7. Formrohr-Einheit nach Anspruch 5,
**dadurch gekennzeichnet, dass**
- dies für jede Längswand (20a - d) gilt,
- sofern die 1. Schwenkachsen (20.1') auf einem 1. Schwenkachsen-Kreis (20.1) liegen und bei vier 1. Schwenkachsen (20.1') diese ein Quadrat bilden.

8. Formrohr-Einheit nach den Ansprüchen 4 und 5 und gewünschtenfalls nach einem der Ansprüche 6 und 7,
**dadurch gekennzeichnet, dass**
- die 1. Schwenkachsen (20.1') bei axialer Betrachtung auf einem 1. Schwenkachsen-Kreis (20.1) angeordnet sind
und/oder
- die 2. Schwenkachsen (20.2') bei axialer Betrachtung auf einem 2. Schwenkachsen-Kreis (20.2) angeordnet sind,
- bei vier 1. Schwenkachsen (20.1') diese bei axialer Betrachtung ein Rechteck, insbesondere ein Quadrat, bilden.

9. Formrohr-Einheit nach einem der vorhergehenden Ansprüche,
**dadurch gekennzeichnet, dass**
- das gemeinsame Betätigungselement (23) ein das Formrohr (20) konzentrisch umgebender Betätigungsring (23) ist,
- der Betätigungsring um die Längsmittellinie (10') des Formrohres (20) gegenüber dem Grundkörper-Ring (22) verdrehbar ist.

10. Formrohr-Einheit nach einem der vorhergehenden Ansprüche,
**dadurch gekennzeichnet, dass**
- das Betätigungselement (23), insbesondere der Betätigungsring (23), mit einem gesteuert antreibbaren Stellelement (21), etwa einem Arbeitszylinder (21), wirkverbunden ist,
- das Stellelement (26) in einer Querrichtung (11.1, 11.2) zur Längsrichtung (10), bei einem Betätigungsring (23) insbesondere tangential zum Betätigungsring (23), beweglich ist.

11. Formrohr-Einheit nach einem der Ansprüche 1 - 3,
**dadurch gekennzeichnet, dass**
- wenigstens eine Längswand (20a - d) gegenüber dem Grundkörper (22) in einer Querrichtung (11.1, 11. 2) zur Längsrichtung (10), insbesondere radial zur Längsmittellinie (10') des Formhohlraumes (7), linear verfahrbar geführt ist,
- vorzugsweise bei einer geraden Anzahl von Längswänden (20a - d)
- jede zweite Längswand (20a - d) mit dem gleichen, diese erste Gruppe von Längswänden (20a - d) gemeinsamen, Betätigungselement (23) wirkverbunden ist,
- die übrigen Längswände (20a - d) jeweils mit einem für diese 2. Gruppe von Längswänden (20a - d) gemeinsamen, anderen Betätigungselement (23) wirkverbunden sind.

12. Formrohr-Einheit nach Anspruch 11,
**dadurch gekennzeichnet, dass**
- je zwei benachbarte Längswände (20a - d) entlang einer in einer Querrichtung verlaufenden Wand-Führung (24) aneinander geführt sind,
- insbesondere jede Längswand (20a - d) mit jeder ihrer beiden benachbarten Längswände (20a - d) entlang einer in einer Querrichtung verlaufenden Wand-führung (24) geführt ist,
- insbesondere die Längswände (20a - d) einer der beiden Gruppen in radialer Richtung zweiteilig ausgebildet sind mit einem Führungsteil, welches die Wand-Führung (24) aufweist und einem Antriebsteil, welches mit dem Betätigungselement (23) wirkverbunden ist und die beiden Teile relativ zueinander beweglich befestigt sind, insbesondere formschlüssig aneinander geführt sind.

13. **Aufschneide-Maschine** (1), um ein unregelmäßig geformten Produkt-Stück (100) aus einem elastischen, Material, z.B. ein Fleisch-Stück (100), in eine Form mit über seine Länge (99) gleichmäßigem Querschnitt (100") zu bringen und anschließend in, insbesondere gewichtsgenaue, Scheiben (101) aufzuschneiden, mit
- einer Formrohr-Einheit (2) zum Umformen des Produkt-Stückes (100)
- einer Schneideinheit (6) mit einem insbesondere rotierenden Messer (3),
- einer Abförder-Einheit mit mindestens einem Abförderer (8) zum Abfördern der abgetrennten Scheiben (101),
- einer Steuerung (1*) zum Steuern beweglicher Teile der Aufschneide-Maschine (1)
**dadurch gekennzeichnet, dass**
die Formrohr-Einheit (2) nach einem der vorhergehenden Ansprüche ausgebildet ist.

14. **Verfahren** zum Umformen eines unregelmäßig geformten, länglichen Produkt-Stückes (100) aus einem teilweise elastischen Material, indem das Produkt-Stück (100) zumindest in mindestens einer Querrichtung (11.1, 11.2) zur Längsrichtung (10) in einem Formrohr (20) einer Formrohr-Einheit (2) nach einem der Ansprüche 1 bis 12 zu einem Produkt-Kaliber (100*) mit über seine Länge (99) weitestgehend gleichmäßigen Querschnitt (100") verpresst wird durch Verlagern der Längswände (20a - d) des Formrohres (20), wobei das Formrohr (20)
- den Formhohlraum (7) mit über seiner Länge gleichmäßigen Querschnitt umfänglich umschließt,
**dadurch gekennzeichnet, dass**
- das Verlagern so erfolgt, dass die Längswände (20a - d) sich linear oder durch eine Schwenkbewegung der Längsmittellinie (10') des Formhohlraumes (7) nähern, den gegenseitigen Kontakt dabei jedoch nicht verlieren.

15. Verfahren nach Anspruch 14,
**dadurch gekennzeichnet, dass**
- das Verlagern so erfolgt, dass der Querschnitt des Formhohlraumes (7) lediglich quantitativ, nicht hinsichtlich seiner Form, insbesondere auch nicht hinsichtlich der Relationen seiner Form, verändert wird
- insbesondere bei einer geraden Anzahl von Längswänden (20a - d) die Paare voneinander bezüglich der axialen Längsmittellinie (10') des Formhohlraumes (7) gegenüberliegenden Seitenwänden (20a - d), insbesondere jeweils alle 2. Längswänden (20a - d) synchron entlang jeweils identischer Bewegungswege bewegt werden,
- insbesondere alle Längswände (20a - d) synchron entlang jeweils identischer Bewegungswege bewegt werden.

## Claims

1. **Forming tube unit** (2) for shaping an irregularly shaped produce piece (100) consisting of a resilient material, e.g. a piece of meat (100), into a shape having a uniform cross-section (100") over its length (99), comprising
- a main body (22),
- a forming tube (20), which has a forming cavity (7) of variable cross-section which is open continuously from one to the opposite end face, i.e. in the longitudinal direction (10), comprising
- longitudinal walls (20 a - d) which adjoin one another in the peripheral direction (U) and peripherally surround the forming cavity (7),
- the longitudinal walls (20 a - d) being movable relative to one another in the transverse direction (11.1, 11.2) relative to the longitudinal direction (10) of the forming tube (20),
- a common actuation element (23) for moving the longitudinal walls (20a - d),
- all the longitudinal walls (20a - d) being arranged so as to be movable relative to the main body (22),
**characterised in that**
- the common actuation element (23) is an actuation ring (23) that surrounds the forming tube (20), and
- the actuation ring is rotatable relative to the main body (22) about a longitudinal centre line (10') of the forming tube (20).

2. Forming tube unit according to claim 1,
**characterised in that**
- the main body (22), viewed in the longitudinal direction (10), is a main body ring (22), in particular a main body annulus (22), that surrounds the forming tube (20), in particular surrounds it concentrically,
and/or
- the forming cavity (7) rotates about the longitudinal centre line (10') in the case of a relative movement of the longitudinal walls (20 a - d) with respect to one another.

3. Forming tube unit according to either of the preceding claims,
**characterised in that**
- each two longitudinal walls (20a - d), neighbouring in the peripheral direction (U), are guided relative to one another along a wall guide (24) extending in the transverse direction (11.1, 11.2),
- in particular, the wall guide (24) is designed such that the two guide parts (24a, b) guided relative to one another are movable towards one another only in the extension direction of the wall guide (24) but cannot be removed from one another transversely to the wall guide (24) in the length region of the wall guide (24),
- in particular, the wall guide (24) is a form-fitting wall guide (24),
- in particular being designed having an undercut guide groove (24a) and a slot nut (24b) that is displaceable therein.

4. Forming tube unit according to any of the preceding claims,
**characterised in that**
- at least one longitudinal wall (20a - d) is fastened to the main body (22) so as to be pivotable about a first swivel pin (20.1') extending in the longitudinal direction (10),
- preferably, in the case of an even number of longitudinal walls (20a - d), every second longitudinal wall (20a - d) is fastened to the main body (22) so as to be pivotable about a first swivel pin (20.1') extending in the longitudinal direction (10).

5. Forming tube unit according to claim 4,
**characterised in that**
- each longitudinal wall (20a - d) that is pivotably fastened to the main body (22) is additionally fastened to a pivot lever (25) so as to be pivotable about a second swivel pin (20.2') that extends in the longitudinal direction (10) and is spaced apart from the first swivel pin (20.1'),
- each pivot lever (25) is fastened to the common actuation element (23) so as to be pivotable about a base swivel pin (23') extending in the longitudinal direction (10),
- the actuation element (23) is movable relative to the main body (22).

6. Forming tube unit according to claim 4 and optionally according to claim 5,
**characterised in that**
if each longitudinal wall (20a - d) is fastened to the common actuation element (23) via a second swivel pin (20.2') and a pivot lever (25), at least one of the swivel pins of the pivot lever (25) and/or the first swivel pin (20.1') has a possibility of moving transversely to its extension direction, in particular transversely to the extension direction of the wall guide (24) and/or in the extension direction of the wall guide (24).

7. Forming tube unit according to claim 5,
**characterised in that**
- this applies for each longitudinal wall (20a - d),
- provided the first swivel pins (20.1') are located on a first swivel pin circle (20.1) and, in the case of four first swivel pins (20.1'), these form a square.

8. Forming tube unit according to claims 4 and 5 and optionally according to either of claims 6 and 7,
**characterised in that**
- when viewed axially, the first swivel pins (20.1') are arranged on a first swivel pin circle (20.1),
and/or
- when viewed axially, the second swivel pins (20.2') are arranged on a second swivel pin circle (20.2),
- in the case of four first swivel pins (20.1'), when viewed axially these form a rectangle, in particular a square.

9. Forming tube unit according to any of the preceding claims,
**characterised in that**
- the common actuation element (23) is an actuation ring (23) that concentrically surrounds the forming tube (20),
- the actuation ring is rotatable relative to the main body ring (22) about a longitudinal centre line (10') of the forming tube (20).

10. Forming tube unit according to any of the preceding claims,
**characterised in that**
- the actuation element (23), in particular the actuation ring (23), is operatively connected to an actuator (21) that can be driven in a controlled manner, for example a power cylinder (21),
- the actuator (26) is movable in a transverse direction (11.1, 11.2) relative to the longitudinal direction (10), in the case of an actuation ring (23) in particular tangentially to the actuation ring (23).

11. Forming tube unit according to any of claims 1 - 3,
**characterised in that**
- at least one longitudinal wall (20a - d) is guided so as to be linearly movable relative to the main body (22), in a transverse direction (11.1, 11.2) relative to the longitudinal direction (10), in particular radially to the longitudinal centre line (10') of the forming cavity (7),
- preferably, in the case of an even number of longitudinal walls (20a - d),
- every second longitudinal wall (20a - d) is operatively connected to the same actuation element (23) that is common to said first group of longitudinal walls (20a - d),
- the remaining longitudinal walls (20a - d) are each operatively connected to another actuation element (23) that is common to said second group of longitudinal walls (20a - d).

12. Forming tube unit according to claim 11,
**characterised in that**
- each two neighbouring longitudinal walls (20a - d) are guided relative to one another along a wall guide (24) extending in the transverse direction,
- in particular, each longitudinal wall (20a - d) is guided relative with each of its two neighbouring longitudinal walls (20a - d) along a wall guide (24) extending in the transverse direction,
- in particular the longitudinal walls (20a - d) of one of the two groups are formed in two parts in the radial direction, having a guide part which comprises the wall guide (24), and a drive part which is operatively connected to the actuation element (23), and the two parts are fastened so as to be movable relative to one another, in particular are guided in a form-fitting manner relative to one another.

13. **Cutting machine** (1) for making an irregularly shaped produce piece (100) consisting of a resilient material, e.g. a piece of meat (100), into a shape having a uniform cross-section (100") over its length (99), and subsequently for cutting it into slices (101), in particular of equal weight, comprising
- a forming tube unit (2) for shaping the product piece (100)
- a cutting unit (6) having an in particular rotating blade (3),
- a removal unit comprising at least one removal means (8) for removing the separated slices (101),
- a controller (1*) for controlling movable parts of the cutting machine (1)
**characterised in that**
the forming tube unit (2) is designed according to any of the preceding claims.

14. **Method** for shaping an irregularly shaped, elongate product piece (100) consisting of a partially resilient material, in that the product piece (100) is pressed, at least in at least one transverse direction (11.1, 11.2) relative to the longitudinal direction (10), in a forming tube (20) of a forming tube unit (2) according to any of claims 1 to 12, to a product gauge (100*) having a largely uniform cross-section (100") over its length (99), by displacing the longitudinal walls (20a - d) of the forming tube (20), the forming tube (20)
- peripherally surrounding the forming cavity (7) having a uniform cross-section over its length,
**characterised in that**
- the displacement takes place such that the longitudinal walls (20a - d) move towards one another linearly or by a pivot movement of the longitudinal centre line (10') of the forming cavity (7), but do not lose reciprocal contact in the process.

15. Method according to claim 14,
**characterised in that**
- the displacement takes place such that the cross-section of the forming cavity (7) is changed merely quantitatively, not with respect to its shape, in particular also not with respect to the relations of its shape
- in particular in the case of an even number of longitudinal walls (20a - d) the pairs of side walls (20a - d) that are opposite one another with respect to the axial longitudinal centre line (10') of the forming cavity (7), in particular in each case every second longitudinal wall (20a - d), are moved synchronously along identical movement paths in each case,
- in particular all the longitudinal walls (20a - d) are moved synchronously along identical movement paths in each case.

## Revendications

1. Unité de tube de formage (2) pour reformer une pièce de produit de forme irrégulière (100) en un matériau élastique, par exemple une pièce de viande (100), en une forme avec une section transversale uniforme (100") sur sa longueur (99), avec
- un corps de base (22),
- un tube de formage (20) qui présente une cavité de formage (7) à section transversale variable ouverte en continu d'une extrémité à l'extrémité opposée, c'est-à-dire dans la direction longitudinale (10),
- des parois longitudinales (20a - d) contiguës dans la direction circonférentielle (U) et entourant circonférentiellement la cavité de formage (7),
- dans laquelle les parois longitudinales (20a - d) sont mobiles les unes par rapport aux autres dans la direction transversale (11.1, 11.2) par rapport à la direction longitudinale (10) du tube de formage (20),
- un élément d'actionnement commun (23) pour déplacer les parois longitudinales (20a - d),
- dans laquelle toutes les parois longitudinales (20a - d) sont agencées mobiles par rapport au corps de base (22),
**caractérisée en ce que**
- l'élément d'actionnement commun (23) est un anneau d'actionnement (23) entourant le tube de formage (20), et
- l'anneau d'actionnement peut tourner autour d'une ligne centrale longitudinale (10') du tube de formage (20) par rapport au corps de base (22).

2. Unité de tube de formage selon la revendication 1,
**caractérisée en ce que**
- le corps de base (22), vu dans la direction longitudinale (10), est un anneau de corps de base (22), en particulier un anneau circulaire de corps de base (22), entourant le tube de formage (20), en particulier de manière concentrique
et/ou
- la cavité de formage (7) tourne autour de la ligne centrale longitudinale (10') dans le cas d'un mouvement relatif des parois longitudinales (20a - d) les unes par rapport aux autres.

3. Unité de tube de formage selon l'une des revendications précédentes, **caractérisée en ce que**
- deux parois longitudinales (20a - d) voisines dans la direction circonférentielle (U) sont guidées ensemble le long d'un guide de paroi (24) s'étendant dans une direction transversale (11.1, 11.2),
- en particulier, le guide de paroi (24) est conçu de telle sorte que les deux parties de guidage (24a, b) guidées ensemble ne sont mobiles l'une par rapport à l'autre que dans la direction d'extension du guide de paroi (24), mais ne peuvent pas être éloignées l'une de l'autre transversalement au guide de paroi (24) dans le domaine de longueur du guide de paroi (24),
- en particulier le guide de paroi (24) est un guide de paroi à ajustement de forme (24),
- en particulier dans la forme de construction avec une rainure de guidage en contre-dépouille (24a) et un bloc de rainure (24b) qui peut être déplacé à l'intérieur.

4. Unité de tube de formage selon l'une des revendications précédentes,
**caractérisée en ce que**
- au moins une paroi longitudinale (20a - d) est fixée de manière à pouvoir pivoter au corps de base (22) autour d'un premier axe de pivotement (20.1') s'étendant dans la direction longitudinale (10),
- de préférence dans le cas d'un nombre pair de parois longitudinales (20a - d), une paroi longitudinale (20a - d) sur deux est fixée au corps de base (22) de manière à pouvoir pivoter autour d'un premier axe de pivotement (20.1') s'étendant dans la direction longitudinale (10).

5. Unité de tube de formage selon la revendication 4,
**caractérisée en ce que**
- chacune des parois longitudinales (20a - d) fixée de manière à pouvoir pivoter au corps de base (22), est en outre fixée à un levier de pivotement (25) de manière à pouvoir pivoter autour d'un deuxième axe de pivotement (20.2') s'étendant dans la direction longitudinale (10) et espacé du premier axe de pivotement (20.1'),
- chaque levier de pivotement (25) est fixé à l'élément d'actionnement commun (23) de manière à pouvoir pivoter autour d'un axe de pivotement de base (23') s'étendant dans la direction longitudinale (10),
- l'élément d'actionnement (23) est mobile par rapport au corps de base (22).

6. Unité de tube de formage selon la revendication 4 et, si désiré, selon la revendication 5, **caractérisée en ce que**
Au cas où chaque paroi longitudinale (20a - d) est fixée à l'élément d'actionnement commun (23) par l'intermédiaire d'un deuxième axe de pivotement (20.2') et d'un levier de pivotement (25), au moins l'un des axes de pivotement du levier de pivotement (25) et/ou le premier axe de pivotement (20.1') présente une possibilité de mouvement transversalement à sa direction d'extension, en particulier transversalement à la direction d'extension du guide de paroi (24) et/ou dans la direction d'extension du guide de paroi (24).

7. Unité de tube de formage selon la revendication 5,
**caractérisée en ce que**
- ceci s'applique à chaque paroi longitudinale (20a - d),
- à condition que les premiers axes de pivotement (20.1') se trouvent sur un premier cercle d'axes de pivotement (20.1) et qu'ils forment un carré dans le cas de quatre premiers axes de pivotement (20.1').

8. Unité de tube de formage selon les revendications 4 et 5 et, si désiré, selon l'une des revendications 6 et 7,
**caractérisée en ce que**
- les premiers axes de pivotement (20,1') vus axialement sont disposés sur un premier cercle d'axes de pivotement (20.1)
et/ou
- les deuxièmes axes de pivotement (20.2'), vus axialement, sont disposés sur un deuxième cercle d'axe de pivotement (20.2),
- dans le cas de quatre premiers axes de pivotement (20.1'), ceux-ci forment, vus axialement, un rectangle, en particulier un carré.

9. Unité de tube de formage selon l'une des revendications précédentes,
**caractérisée en ce que**
- l'élément d'actionnement commun (23) est un anneau d'actionnement (23) entourant concentriquement le tube de formage (20),
- l'anneau d'actionnement peut tourner autour de la ligne centrale longitudinale (10') du tube de formage (20) par rapport à l'anneau de corps de base (22).

10. Unité de tube de formage selon l'une des revendications précédentes,
**caractérisée en ce que**
- l'élément d'actionnement (23), en particulier l'anneau d'actionnement (23), est relié fonctionnellement à un élément de commande (21) pouvant être entraîné de manière commandée, tel qu'un cylindre de travail (21),
- l'élément de commande (26) est mobile dans une direction transversale (11.1, 11.2) par rapport à la direction longitudinale (10), en particulier tangentiellement à l'anneau d'actionnement (23) dans le cas d'un anneau d'actionnement (23).

11. Unité de tube de formage selon l'une des revendications 1 à 3,
**caractérisée en ce que**
- au moins une paroi longitudinale (20a - d) est guidée de manière mobile linéairement par rapport au corps de base (22) dans une direction transversale (11.1, 11.2) par rapport à la direction longitudinale (10), en particulier radialement par rapport à la ligne centrale longitudinale (10') de la cavité de formage (7),
- de préférence dans le cas d'un nombre pair de parois longitudinales (20a - d)
- une paroi longitudinale (20a - d) sur deux est reliée fonctionnellement au même élément d'actionnement (23), commun à ce premier groupe de parois longitudinales (20a - d),
- les parois longitudinales (20a - d) restantes sont chacune reliées fonctionnellement à un autre élément d'actionnement (23), commun à ce deuxième groupe de parois longitudinales (20a - d).

12. Unité de tube de formage selon la revendication 11,
**caractérisée en ce que**
- deux parois longitudinales (20a - d) voisines sont guidées ensemble le long d'un guide de paroi (24) s'étendant dans une direction transversale,
- en particulier, chaque paroi longitudinale (20a - d) est guidée avec chacune de ses deux parois longitudinales (20a - d) voisines le long d'un guide de paroi (24) s'étendant dans une direction transversale,
- en particulier, les parois longitudinales (20a - d) de l'un des deux groupes sont conçues en deux parties dans la direction radiale avec une partie de guidage, qui comprend le guidage de paroi (24) et une partie d'entraînement, qui est reliée fonctionnellement à l'élément d'actionnement (23) et les deux parties sont fixées de manière mobile l'une par rapport à l'autre, en particulier sont guidées ensemble par ajustement de forme.

13. Machine à trancher (1) pour amener une pièce de produit (100) de forme irrégulière en un matériau élastique, par exemple une pièce de viande (100), en une forme avec une section transversale (100") uniforme sur sa longueur (99) puis la découper en tranches (101), notamment de poids précis, avec
- une unité de tube de formage (2) pour mettre en forme la pièce de produit (100)
- une unité de coupe (6) avec un couteau (3) en particulier rotatif,
- une unité de déchargement avec au moins un convoyeur de déchargement (8) pour décharger les tranches (101) séparées,
- une commande (1*) pour commander les parties mobiles de la machine à trancher (1)
**caractérisée en ce que**
l'unité de tube de formage (2) est conçue selon l'une des revendications précédentes.

14. Procédé pour mettre en forme une pièce de produit allongée et de forme irrégulière (100) en un matériau partiellement élastique, en pressant la pièce de produit (100) au moins dans au moins une direction transversale (11.1, 11.2) par rapport à la direction longitudinale (10) dans un tube de formage (20) d'une unité de tube de formage (2) selon l'une des revendications 1 à 12 à un calibre de produit (100*) avec une section transversale largement uniforme (100") sur sa longueur (99) par déplacement des parois longitudinales (20a - d) du tube de formage (20), dans lequel le tube de formage (20)
- entoure circonférentiellement la cavité de formage (7) avec une section transversale uniforme sur sa longueur,
**caractérisé en ce que**
- le déplacement s'effectue de telle sorte que les parois longitudinales (20a - d) se rapprochent de la ligne centrale longitudinale (10') de la cavité de formage (7) de manière linéaire ou par un mouvement de pivotement mais sans perdre le contact mutuel.

15. Procédé selon la revendication 14,
**caractérisé en ce que**
- le déplacement s'effectue de telle sorte que la section transversale de la cavité de formage (7) est modifiée seulement quantitativement, pas concernant sa forme, en particulier pas non plus concernant les relations de sa forme
- en particulier dans le cas d'un nombre pair de parois longitudinales (20a-d), les paires de parois latérales (20a-d) opposées l'une à l'autre par rapport à la ligne centrale longitudinale axiale (10') de la cavité de formage (7) sont déplacées de manière synchrone le long de trajectoires de déplacement identiques, en particulier une paroi longitudinale (20a-d) sur deux est déplacée de manière synchrone le long de trajectoires de déplacement identiques,
- en particulier, toutes les parois longitudinales (20a-d) sont déplacées de manière synchrone le long de trajectoires de déplacement identiques.
